# EUROPEAN PATENT APPLICATION

(11) **EP 4 071 217 A1**
(43) Date of publication of application: **12.10.2022**
(21) Application number: 20904736.4
(22) Date of filing: 23.12.2020
(51) Int. Cl.: C09D 11/101, C09D 11/03, C09D 11/326, C09D 11/38, B41M 5/00, B41M 7/00

(54) **ULTRA VIOLET CURABLE AQUEOUS INK COMPOSITION AND METHOD FOR PRODUCING SAME**

(30) Priority: 23.12.2019 KR 20190173420
(71) Applicant: Kctlab Co., LTD., Yongin-si, Gyeonggi-do 16827 (KR)
(72) Inventor: CHUNG, Kwang-Choon, Yongin-si Gyeonggi-do 16820 (KR); JUNG, Yun Ho, Ansan-si Gyeonggi-do 15469 (KR)
(74) Representative: Canzler & Bergmeier Patentanwälte Partnerschaft mbB
(86) International application number: PCT/KR2020/018993
(87) International publication number: WO 2021/133057

(57) **Abstract**

The present invention relates to an aqueous ultra violet curable ink and a method for producing same. Specifically, the present invention relates to: an ultra violet curable aqueous dispersant and a method for producing same; an ultra violet curable aqueous ink composition and a method for producing same; and a method for forming an image on a recording medium. The ultra violet curable aqueous dispersant and the ultra violet curable aqueous ink composition comprising same, according to the present invention, are not limited in material selection, and can improve the touch and fastness of an adherend in the field of textiles.

## Description

### [Technical Field]

The disclosure relates to an ultraviolet (UV) curable aqueous ink composition and a method of preparing the same. In particular, the disclosure relates to a UV curable aqueous dispersant, a method of preparing the same, a UV curable aqueous ink composition, a method of preparing the same, and a method of forming an image on a recording medium.

### [Background Art]

Ultraviolet (UV) curing technology refers to curing and drying technology, also called photocuring, in which a UV curing resin that is instantly cured, dried and adhered when irradiated with UV rays, i.e., energy having a short wavelength and causing a chemical reaction is applied to a material, and the material is cured and dried with the irradiated UV rays.

The UV curing technology has begun to be put to practical use in the fields of printing; is being used in painting, varnishing, coating, bonding between precision parts such as semiconductors, electronic parts, optical parts, etc. adhesion of liquid crystal panel, and so on; and is expanding to various fields such as nanotechnology, etc.

As compared with curing based on 'heat', the characteristics of the UV curing technology are as follows. First, as compared with the curing and drying based on the heat, it takes a short time to carry out the UV curing because a UV curing process is completed in only a few seconds. Further, the UV rays do not need high heat and thus perform the curing without raising the temperature of an object to be irradiated, thereby curing even a material vulnerable to heat without deformation or deterioration. In addition, a manufacturing site is simplified because a heating system for heating is not required, and it is eco-friendly because there is little risk of toxic gas or water pollution.

Such UV curing technology is in particular useful in the fields of printing. In some cases where curing and drying processes are additionally required to improve the fastness and stability of pigments or dyes contained in printed ink, the UV curing technology may be useful when the heat-based curing process is not applicable to printing on a material that is likely to deteriorate under high temperature conditions.

The UV curing employs UV curable ink, and the UV curable ink refers to ink that is cured from a liquid state to a solid state in seconds by a photochemical reaction based on the energy of UV rays. As compared with conventional ink, the usability of the UV curable ink is high because there are many advantages such as instant drying, solvent-free, pollution-free, etc. However, the UV curable ink has problems that a unit cost is relatively high, a curing speed is varied depending on the thickness, the curing is not easy in uneven portions, and a large amount of energy is consumed in irradiating the UV rays.

As the related arts of conventional UV curable ink, there are an UV curable liquid composition including a cationic polymerizable liquid monomer, a photopolymerization initiator, and a photopolymerization sensitizer (see Korean Patent Publication No. 10-2017-0102325);an ink vehicle additionally including curable wax containing acrylate (see Korean Patent No.10-1792888);a phase-change ink vehicle including a monomer or prepolymer curable with UV ray irradiation, a UV ray initiator, and reactive wax and gelling agent (see Korean Patent No. 10-1653831);a UV curable adhesive resin containing urethane(meth)acrylate resin, a (meth)acrylic monomer, and a photopolymerization initiator(see Korean Patent No.10-1988922), and so on. However, such conventional UV curable ink has limitations in selecting a material of an object-to-be-subjected-to-printing in terms of physical properties, and in particular has problems that it is difficult to be fixed to a cellulose microstructure of a fiber material and improve fastness based on the fixedness, and it is not easy to be implemented as an aqueous composition.

Accordingly, the inventor of the disclosure has tried to solve the foregoing problems, and thus the disclosure has been completed by preparing a UV curable aqueous dispersion liquid, which is water-based having few limitations in selecting a material and exhibits excellent fastness based on irradiation of UV rays, and a UV curable aqueous ink composition including the same.

### [Disclosure]

### [Technical Problem]

An aspect of the disclosure is to provide an ultraviolet (UV) curable aqueous dispersant including a UV curable functional group.

Here, according to the disclosure, a dispersion, an aqueous dispersion solution, or a dispersion liquid, which is dispersed from the UV curable aqueous dispersant, may be provided.

Another aspect of the disclosure is to provide a UV curable aqueous ink composition that includes (a) the UV curable aqueous dispersant; (b) an aqueous amine including a UV curable functional group; and(c) one or more selected among pigments and dyes.

Another aspect of the disclosure is to provide a method of preparing a UV curable aqueous ink composition, the method comprising: (a) preparing a UV curable aqueous dispersant including a UV curable functional group; (b) mixing the UV curable aqueous dispersant and an aqueous amine including a UV curable functional group; and (c) adding one or more selected among pigments and dyes.

Here, an aqueous dispersant including no UV curable functional group may be further provided.

Another aspect of the disclosure is to provide a method of preparing a UV curable aqueous ink composition, the method comprising (a) preparing a dye/pigment dispersion liquid by adding and dispersing one or more selected among pigments and dyes to a UV curable aqueous dispersant including a UV curable functional group; and (b) adding and mixing an aqueous amine including a UV curable functional group to the dye/pigment dispersion liquid.

Here, an aqueous dispersant including no UV curable functional group may be further provided.

Another aspect of the disclosure is to provide a method of preparing a UV curable aqueous ink composition, the method including: (a) simultaneously adding and mixing a UV curable aqueous dispersant including a UV curable functional group, one or more selected among pigments and dyes, and an aqueous amine including a UV curable functional group to purified water; and (b) performing dispersion after the (a).

Here, an aqueous dispersant including no UV curable functional group may be further provided.

Another aspect of the disclosure is to provide a method of preparing a UV curable aqueous ink composition, the method including: (a) mixing an aqueous dispersant including no UV curable functional group and an aqueous amine including the UV curable functional group; and (b) adding one or more selected among pigments and dyes.

Another aspect of the disclosure is to provide a method of preparing a UV curable aqueous ink composition, the method including: (a) preparing a dye/pigment dispersion liquid by adding and dispersing one or more selected among pigments and dyes to an aqueous dispersant including no UV curable functional group; and (b) adding and mixing an aqueous amine including a UV curable functional group to the dye/pigment dispersion liquid.

Another aspect of the disclosure is to provide a method of preparing a UV curable aqueous ink composition, the method including: (a) simultaneously adding and mixing an aqueous dispersant including no UV curable functional group, one or more selected among pigments and dyes, and an aqueous amine including a UV curable functional group to purified water; and (b) performing dispersion after the (a).

Another aspect of the disclosure is to provide a method of preparing aUV curable aqueous ink composition, the method including neutralizing an aqueous dispersant with a monomer including a counter ion.

Another aspect of the disclosure is to provide a method of preparing a UV curable aqueous ink composition, the method including preparing a UV curable aqueous ink composition by applying a UV curable cation as a counter ion to an aqueous dispersant.

Another aspect of the disclosure is to provide a method of forming an image on a recording medium, the method including: (a) printing the UV curable aqueous ink composition onto a printing area surface of the recording medium; and (b) irradiating ink on the printing area surface with UV rays.

Here, the UV curable aqueous ink composition according to the disclosure may be applied and used in various printing methods such as inkjet, gravure, flexo, offset printing, etc.

### [Technical Solution]

According to an embodiment of the disclosure, there is provided an ultraviolet (UV) curable aqueous dispersant including a UV curable functional group.

Here, according to the disclosure, a dispersion, an aqueous dispersion solution, or a dispersion liquid, which is dispersed from the UV curable aqueous dispersant, may be provided.

The UV curable functional group may include a UV curable functional group for dispersing dyes/pigments.

The UV curable aqueous dispersant may include a styrene acrylic dispersant or styrene-maleic anhydride dispersant including the UV curable functional group.

The UV curable functional group may be introduced by chemical bonding.

According to the disclosure, there is provided a UV curable aqueous ink composition including (a) the UV curable aqueous dispersant; (b) an aqueous amine including a UV curable functional group; and (c) one or more selected among pigments and dyes.

The UV curable aqueous dispersant may be improved in colloidal stability by an encapsulation reaction.

One or more selected among water-soluble and water-dispersible resins may be further provided.

A UV curable monomer or oligomer may be additionally provided.

The aqueous amine may include a primary amine, a secondary amine, a tertiary amine, or a quaternary amine.

The UV curable functional group in the (b) may be based on a chemical bond or an ionic bond.

An aqueous dispersant including no UV curable functional group may be further provided.

Meanwhile, the ink composition may be used as an ink composition for inkjet. However, the use of the ink composition is not limited to the inkjet, and the aqueous UV curable ink composition according to the disclosure may be prepared as ink applicable to various printing methods such as gravure, flexo, offset printing, etc.

According to the disclosure, there is provided a method of preparing a UV curable aqueous ink composition, the method including: (a) preparing a UV curable aqueous dispersant including a UV curable functional group; (b) mixing the UV curable aqueous dispersant and an aqueous amine including a UV curable functional group; and(c) adding one or more selected among pigments and dyes.

Here, an aqueous dispersant including no UV curable functional group may be further provided.

According to the disclosure, there is provided a method of preparing a UV curable aqueous ink composition, the method including: (a) preparing a dye/pigment dispersion liquid by adding and dispersing one or more selected among pigments and dyes to a UV curable aqueous dispersant including a UV curable functional group; and (b) adding and mixing an aqueous amine including a UV curable functional group to the dye/pigment dispersion liquid.

The (b) may include adding and mixing additives and the aqueous amine including the UV curable functional group to the dye/pigment dispersion liquid.

Here, an aqueous dispersant including no UV curable functional group may be further provided.

In detail, for example, a UV curable aqueous ink composition may be prepared by preparing pigment and/or dye dispersion liquid by adding and dispersing pigments and/or dyes to the existing general aqueous dispersant including no UV curable functional group and/or the UV curable aqueous dispersant solution including the UV curable functional group according to the disclosure; and adding and mixing other additives and the aqueous amine including the UV curable functional group to the dye/pigment dispersion liquid composition.

According to the disclosure, there is provided a method of preparing a UV curable aqueous ink composition, the method including: (a) simultaneously adding and mixing a UV curable aqueous dispersant including a UV curable functional group, one or more selected among pigments and dyes, and an aqueous amine including a UV curable functional group to purified water; and (b) performing dispersion after the (a).

The (a) may include simultaneously adding and mixing the UV curable aqueous dispersant, one or more selected among the pigments and dyes, the aqueous amine including the UV curable functional group, and additives to the purified water.

Here, an aqueous dispersant including no UV curable functional group may be further provided.

In detail, for example, a UV curable aqueous ink composition may be prepared by simultaneously adding, mixing and dispersing other additives, the existing general aqueous dispersant including no UV curable functional group and/or the UV curable aqueous dispersant including the UV curable functional group according to the disclsoure, pigments and/or dyes, and the aqueous amine including the UV curable functional group, to purified water.

The UV curable functional group of the UV curable aqueous dispersant may include a UV curable functional group for dispersing the dyes/pigments.

The UV curable aqueous dispersant in the (a) may include a styrene acrylic dispersant or styrene-maleic anhydride dispersant including the UV curable functional group.

The UV curable functional group of the UV curable aqueous dispersant may be introduced by chemical bonding.

The UV curable aqueous dispersant may be improved in colloidal stability by an encapsulation reaction.

One or more selected among water-soluble and water-dispersible resins may be provide.

Adding a UV curable monomer or oligomer may be further provided.

The aqueous amine in the (b) may include a primary amine, a secondary amine, a tertiary amine, or a quaternary amine.

The UV curable functional group of the aqueous amine may be based on a chemical bond or an ionic bond.

Here, an aqueous dispersant including no UV curable functional group may be further provided.

According to the disclosure, there is provided a method of preparing a UV curable aqueous ink composition, the method including: (a) mixing an aqueous dispersant including no UV curable functional group and an aqueous amine including the UV curable functional group; and (b) adding one or more selected among pigments and dyes.

According to the disclosure, there is provided a method of preparing a UV curable aqueous ink composition, the method including: (a) preparing a dye/pigment dispersion liquid by adding and dispersing one or more selected among pigments and dyes to an aqueous dispersant including no UV curable functional group; and (b) adding and mixing an aqueous amine including a UV curable functional group to the dye/pigment dispersion liquid.

The (b) may include adding and mixing additives and the aqueous amine including the UV curable functional group to the dye/pigment dispersion liquid.

According to the disclosure, there is provided a method of preparing a UV curable aqueous ink composition, the method including: (a) simultaneously adding and mixing an aqueous dispersant including no UV curable functional group, one or more selected among pigments and dyes, and an aqueous amine including a UV curable functional group to purified water; and (b) performing dispersion after the (a).

The (a) may include simultaneously adding and mixing the aqueous dispersant, one or more selected among the pigments and dyes, the aqueous amine including the UV curable functional group, and additives to the purified water.

The aqueous dispersant may be improved in colloidal stability by an encapsulation reaction.

One or more selected among water-soluble and water-dispersible resins may be further provided.

Adding a UV curable monomer or oligomer may be further provided.

The aqueous amine may include a primary amine, a secondary amine, a tertiary amine, or a quaternary amine.

The UV curable functional group of the aqueous amine is based on a chemical bond or an ionic bond.

Here, the aqueous dispersant including no UV curable functional group, the aqueous amine including the UV curable functional group, and dyes and/or pigments may be used to prepare the UV curable aqueous ink composition.

According to the disclosure, there is provided a method of preparing a UV curable aqueous ink composition, the method including neutralizing an aqueous dispersant with a monomer including a counter ion.

Here, adding an aqueous amine including the UV curable functional group may be further provided.

The aqueous amine may include a primary amine, a secondary amine, a tertiary amine, or a quaternary amine.

The UV curable functional group of the aqueous amine may be based on a chemical bond or an ionic bond.

According to the disclosure, there is provided a method of preparing a UV curable aqueous ink composition, the method including preparing a UV curable aqueous ink composition by applying a UV curable cation as a counter ion to an aqueous dispersant.

The aqueous dispersant may be improved in colloidal stability by an encapsulation reaction.

One or more selected among water-soluble and water-dispersible resins may be further provided.

Adding a UV curable monomer or oligomer may be further provided.

According to the disclosure, there is provided a method of forming an image on a recording medium, the method including: (a) printing the UV curable aqueous ink composition onto a printing area surface of the recording medium; and (b) irradiating ink on the printing area surface with UV rays.

Here, the UV curable aqueous ink composition according to the disclosure may be applied and used in various printing methods such as inkjet, gravure, flexo, offset printing, etc.

### [Advantageous Effects]

As described above, an ultraviolet (UV) curable aqueous dispersant composition, and a UV curable aqueous ink composition including the same have no limitations in selecting a material because it is easily printed on fibers such as wool, silk, cotton, glass fiber, nylon, polyester; films such as polyethylene terephthalate (PET), polyvinylchloride (PVC), polycarbonate (PC), polyethylene (PE), polypropylene (PP), polyimide (PI); plastic; glass; wood; stone; metal; paper; etc., improve the texture of an object, which is subjected to printing, in the fields of textile, and improve the fastness against washing/friction and the fastness against the sunlight.

Further, it is applicable to digital printing, shorten the processes required in the irradiation of the UV rays, and secure high stability because of less change in physical properties even in long-term storage after preparing ink or even in exposure to the outside during delivery.

### [Description of Drawings]

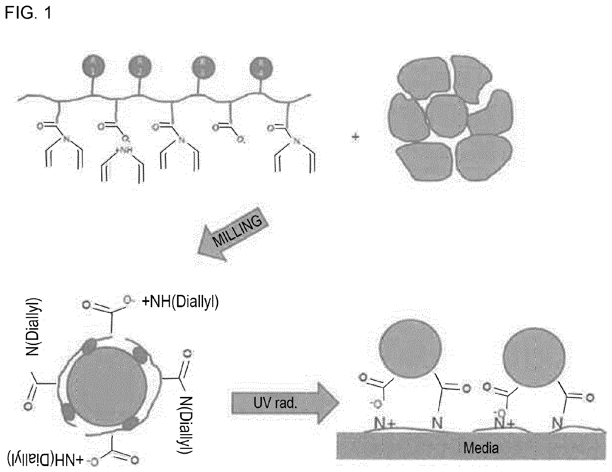

FIG. 1 is a diagram structurally and chemically showing a method of preparing an ultraviolet (UV) curable aqueous ink composition according to the disclosure.

### [Mode for Carrying out Disclosure]

Unless otherwise defined, all the technical and scientific terms used herein have the same meanings as those typically understood by those skilled in the art to which the disclosure pertains. In general, the nomenclature used herein is well known in the art and is typical.

According to an aspect, the disclosure relates to an ultraviolet (UV) curable aqueous dispersant(dispersion, aqueous dispersion solution, dispersion liquid) composition including (a) a base resin; and (b) a UV curable functional group.

Further, according to another aspect, the disclosure relates to a method of preparing a UV curable aqueous dispersant composition, the method including a step of introducing a UV curable functional group to a base resin.

In the disclosure, the term "aqueous" is a concept encompassing both water solubility and water dispersibility.

In the disclosure, the base resin refers to a binder-type dispersant that gives water dispersibility to pigments or dyes, and specifically may be an aqueous dispersant. As the aqueous dispersant according to the disclosure, the base resin may specifically include a styreneacrylic(SA) dispersant, a styrene-maleic anhydride (SMA)dispersant, an urethane(PU) dispersant, a linear polymer dispersant, or the like linear polymer dispersant; a star-burst or comb-type polymer dispersant modified from the linear polymer dispersant; or combination of one or more dispersants.

According to the disclosure, the base resin generally has an average molecular weight of 2,000 to 200,000, measured by gel permeation chromatography, and further generally has a molecular weight of 5,000 to 40,000.

In the disclosure, the base resin may be used as an auxiliary dispersant to increase an efficiency of preparing the dispersion liquid. The chemical composition of the base resin may include (meth)acrylate, (meth)acrylic acid copolymer, styrene-acrylic acid copolymer, etc., and may control adsorption with pigments and dispersibility in an aqueous or oily medium by adjusting a hydrophilicity-hydrophobicity ratio based on a percentage of monomers (i.e., hydrophobic monomers such as unsaturated acrylate, and hydrophilic monomers such as acrylic acid or hydroxy acryl) used during polymerization. Further, the base resin may increase the fixedness and gloss of the ink composition.

Further, the base resin, which is used as the auxiliary dispersant when the dispersion liquid according to the disclosure is prepared, may include commercially available dispersants, for example, Zetasperse 2500, Zetasperse 3100, Zetasperse 3400, Zetasperse 3600, or Zetasperse 3700 of the Air Product company; HPD 296, LMV 7025, Joncryl 693 or Joncryl 67 of the BASF company; DISPERBYK 194, DISPERBYK 190, DISPERBYK 199, DISPERBYK 2012, DIPERBYK 2010, DISPER 2014, BYKJET 9170, or BYKJET 9171 of the BYK company; SMA1000, SMA2000, SMA2021, or SMA3000 of the Total Petrochemical company; Solsperse WV400 of the Lubrizol company; JEFFSPERSE X3204 or JEFFSPERSE X3503 of the Huntsman company; etc., but is not limited thereto.

According to the disclosure, the UV curable functional group refers to functional group connected to each other based on a chemical crosslinking reaction that occurs between the UV curable functional groups as irradiated with UV rays. The UV curable functional group may be introduced into the base resin by chemical bonding.

In the disclosure, the UV curable functional group introduced into the base resin by chemical bonding specifically includes the following chemical formula.

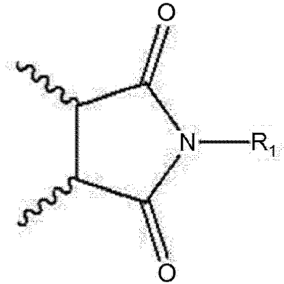

According to the disclosure, the UV curable functional group may have the above structure, in which R₁ may be an allyl group or an acryl, methacrylic group including acryl, methacrylic, ethylene oxide or propylene oxide additives.

Further, according to the disclosure, the UV curable functional group may include the following structure in which the maleic anhydride ring is opened.

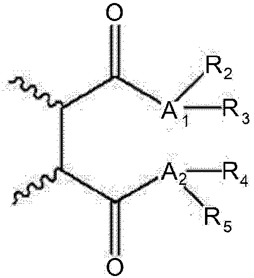

Here, A₁ and A₂ may be nitrogen or oxygen. When A₁ and A₂ are nitrogen, R₂, R₃, R₄ and R₅ may be the same or different, and may be hydrogen or an acryl, methacrylic group including allyl, acryl, methacrylic, ethylene oxide or propylene oxide additives.

Further, according to the disclosure, the UV curable functional group may have the following chemical structure,

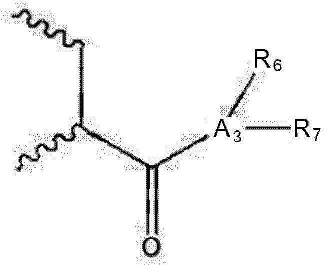

Here, A₃ may be oxygen or nitrogen, and R₆ and R₇ may be the same or different, and may be an acryl, methacrylic group including allyl, acryl, methacrylic, ethylene oxide or propylene oxide additives.

In the disclosure, the UV curable dispersant may have an acid value higher than equal to 100mgKOH/g or lower than or equal to 300mgKOH/g. When the acid value of the dispersant is lower than 100mgKOH/g, the dispersant has low solubility in water and is not suitable for dispersing aqueous pigments. On the other than, when the acid value of the dispersant is higher than 300mgKOH/g, the dispersant has high solubility in water and hardly functions as the dispersant because the dispersant is not adsorbed to the surfaces of pigments and dispersion dyes but dissolved in water.

According to the disclosure, the UV curable aqueous dispersant composition may be characterized in maintaining the size of dispersed colloidal particles stably, and adjusting the speed of being adsorbed or absorbed in an object-to-be-subjected-to-printing according to points in time of irradiation of UV rays when ink is printed on the object so that a lot of pigment particles such as dispersion dyes and pigments can remain on the surface of the object or be strongly fixed after penetrating deep into the object.

According to another aspect, the disclosure is to provide a UV curable aqueous ink composition including (a) a UV curable aqueous dispersant composition; (b) an aqueous amine including a UV curable functional group; and (c) pigments or dyes.

The UV curable aqueous dispersant composition, and the UV curable functional group are the same as described above.

In the disclosure, the UV curable aqueous ink composition may additionally include a UV curable monomer or oligomer. In this case, the monomer or oligomer may be cationic, anionic, aqueous, or wettable, and the composition of the monomer or oligomer may be adjusted according to the characteristics of a material. When the UV curable monomer or oligomer is included, UV crosslinking performance may be improved because a crosslinking reaction occurs simultaneously with occurrence of a polymerization reaction due to irradiation of UV rays and heating according to the compositions.

According to the disclosure, the aqueous amine may include the UV curable functional group, in which the UV curable functional group may be chemically introduced. In the disclosure, the aqueous amine is an aminebased monomer that may be used as a counter ion of a dispersion resin and may also be used in a neutralization reaction of the commercially available dispersion resin. Further, when the dispersion resin is neutralized, the aqueous amine may be used mixing with anon-curable counter ion. In this case, a use ratio of UV curable counter ion and the UV non-curable counter ion may be appropriately adjusted to optimize dispersion properties.

The aqueous UV curable amine may include a primary amine, a secondary amine, a tertiary amine, or a quaternary amine, and may have the following structures.

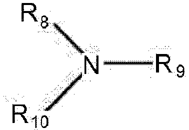

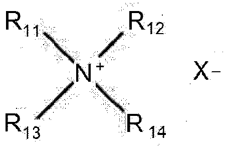

In the disclosure, R₈, R₉ and R₁₀ may be the same or different, and may be hydrogen or an allyl, acryl, methacrylic group including allyl, acryl, hydroxyethyl, hydroxy(iso)propyl, hydroxy(iso)butyl, hydroxy(iso)pentyl, hydroxy(iso)hexyl, methacrylic, ethylene oxide or propylene oxide additives.

In the disclosure, R₁₁, R₁₂, R₁₃, R₁₄ may be the same or different, and may be alkyl or an allyl, acryl, methacrylic group including aryl, allyl, acryl, hydroxyethyl, hydroxy(iso)propyl, hydroxy(iso)butyl, hydroxy(iso)pentyl, hydroxy(iso)hexyl, methacrylic, ethylene oxide or propylene oxide additives.

In the disclosure, X is an anion as a counter ion to ammonium. Representatively, X may be a halogen anion or a sulfonic acid anion.

Specifically, X may be allylamine or its salt, diallylamineor its salt, triallylamineor its salt, DMAEMA (2-(dimethylamino)ethyl (meth)acrylate, DMEAEMA) or its salt, DMAEAAA (N,N-dimethylaminoethylacrylamide) or its salt, DEAEAA (diethylaminoethylacrylamide) or its salt, N-vinylpyrrolidone, vinylpyridine, N-vinylacetamide, N,N-bis(2-hydroxyethyl)acrylamide, N,N-bis(2-hydroxyethyl) methacrylamide, N-allyldiethanolamine or its salt, N,N-diallylethanolamine or its salt, diallyldihydroxyethylammoniumchloride, tetraallylammoniumchloride, triallylhydroxyethylchloride, dimethyldiallylammoniumchloride, N,N-diallylethylene oxide/propylene oxide additives, triallylethylene oxide/propylene oxide additives, or the like basic cationic or aqueous monomer, but not limited thereto.

The aqueous UV curable amine may use a monomer having characteristics of a wetting agent to prevent dryness on the outside.

According to the disclosure, the pigments or dyes include all of inorganic pigments, organic pigments, inorganic dyes, or organic dyes, and include pigments or dyes usable for jetting ink. Such pigments or dyes are additionally subjected to an encapsulation reaction based on a reaction with a crosslinking agent such as epoxide, carbodiimide, etc., thereby further improving colloidal safety.

According to the disclosure, a water-soluble and/or water-dispersible resin may be added to improve adhesion and elongation to a recording medium. According to the disclosure, the UV curable aqueous ink composition may be useful for inkjet ink and may be a colorant for painting, coating, fiber or stationery.

According to the disclosure, the ink composition may include one or more additives selected from the group consisting of a moisturizer, a surfactant, an initiator, a curing accelerator, an adhesion promotor, a water-soluble and/or water dispersible resin, a filler, a defoamer, a preservative, an anticoagulant, a polymerization retardant, and an antioxidant.

According to the disclosure, the water-soluble and/or water dispersible resin may include one or more selected from the group consisting of anionic or nonionic resins.

According to the disclosure, the initiator may be water-soluble or water-dispersible, and may include a photo-initiator, a thermal polymerization initiator, or a cationic initiator.

According to the disclosure, the moisturizer may include one or more selected from the group consisting of ethyleneglycol, propyleneglycol, diethyleneglycol, triethyleneglycol, pentamethyleneglycol, trimethyleneglycol, 2-butene-1,4-diol, 2-ethyl-1,3-hexanediol, 1,2-hexanediol, 2-methyl-2,4-pentanediol, tripropyleneglycol, polyethyleneglycol having a number average molecular weight of not more than 2000, 1,3-propyleneglycol, isopropyleneglycol, isobutyleneglycol, glycerin, diglycerin, and polyglycerin.

According to the disclosure, the surfactant may include one or more selected from the group consisting of an anionic surfactant, a cationic surfactant, a nonionic surfactant, and a fluorine surfactant.

Another aspect of the disclosure is to provide a method of preparing a UV curable aqueous ink composition, the method including the steps of (a) preparing a UV curable aqueous dispersant by introducing a UV curable functional group into a base resin; (b) preparing an aqueous amine including the UV curable functional group by introducing the UV curable functional group into an aqueous amine; (c) mixing the UV curable aqueous dispersant and an aqueous amine including the UV curable functional group; and (d) adding pigments or dyes.

The UV curable aqueous dispersant, the aqueous amine, the pigments, and the dyes are the same as described above.

According to the disclosure, the method of preparing the UV curable aqueous ink composition may additionally include the step of adding an aqueous UV-crosslinking monomer or oligomer. When the UV curable monomer or oligomer is included, UV crosslinking performance may be improved because a crosslinking reaction occurs and polymerization occurs due to irradiation of UV rays and heating.

Another aspect of the disclosure is to provide a method of forming an image on a recording medium, the method including the steps of (a) printing (or applying) a UV curable aqueous ink composition(or forming an image) on a printing area surface of the recording medium; and (b) irradiating UV rays to the ink on the printing area surface.

According to the disclosure, the recording medium refers to an object to which an ink composition is printed, or an object-to-be-subjected-to-printing, and may for example include fibers such as wool, silk, cotton, glass fiber, nylon, polyester; films such as polyethylene terephthalate (PET), polyvinylchloride (PVC), polycarbonate (PC), polyethylene (PE), polypropylene (PP), polyimide (PI); plastic; glass; wood; stone; metal; paper; etc., but is not limited thereto. In more detail, the recording medium may be a fabric, which may for example include natural fibers such as silk, cotton, and wool, and synthetic fibers such as nylon, polyester, and rayon, but is not limited to a specific material.

When ink on the printing area surface is irradiated with the UV rays, the aqueous dispersant is insolubilized due to a crosslinking reaction between the UV curable functional group of the dispersant and the UV curable functional group of the aqueous amine counter ion. In this case, an ionic bond and a chemical bond between the ink and an object-to-be-subjected-to-printing on the surface of the object reduce fluidity, improve image sharpness without spreading color, improve the fixedness of the ink to the object, thereby leading to the improvement in the fastness. In particular, in a cellulose microstructure of highly absorbent fibers and microfibers, physical fixedness between pigments and the microstructure of the object-to-be-subjected-to-printing becomes stronger according to UV curing conditions, thereby further improving the fastness against washing and friction.

According to the disclosure, in the image forming method, a pretreatment agent may use a cationic resin, an amine compound, a cationic monomer, a polymerization initiator, and a polyvalent metal salt or the like capable of preparing a water-insoluble complex such as Ca++, Mg++, etc. For example, the polymerization initiator may use ceric ammonium nitrate (CAN).

In the disclosure, the term "composition" is considered to encompass not only a product containing a specific ingredient but also any product made directly or indirectly by combining the specific ingredients.

### [Embodiments]

Below, the disclosure will be described in more detail through embodiments. These embodiments are for illustrative purposes only, and it will be apparent for a person having ordinary knowledge in the art that the scope of the disclosure is not limited to these embodiments. Accordingly, the substantial scope of the disclosure will be defined by the appended claims and their equivalents.

### Embodiment 1: Preparation of UV curable aqueous dispersant

### 1-1: Preparation of UV curable aqueous dispersion resin

A styrene-maleic anhydride resin was used as the base resin, and the UV curable functional group was prepared by introducing the compositions of the following Table 1 into theresin by chemical bonding.

### Embodiment 1-1a

100g of SMA 2021F (Total Petrochemical) and150g of N-methylpyrrolidone(NMP) were mixed in a 4-neck round-bottom flask and completely dissolved at 40°C, and the mixture of 20g of aniline and toluene 25was added dropwise to the foregoing reaction solution. The reaction solution was reacted for 2 hours after raising its temperature to 60°C. The reaction solution was treated by the Dean-stark reflux reaction for 12 hours after raising its temperature to 150°C. After removing toluene from the reaction solution by distillation, the reaction solution was cooled down to 60°C, and then additionally reacted for 2 hours after adding 10g of diallylamine and10g of Zepamine M2070 to the reaction solution. The reaction solution was re-precipitated in 4L of purified water, and then filtering and cleaning were performed. Redispersion/filtration processes were performed three times to sufficiently remove the residual solvent, and drying was performed at 80°C. Finally, 121g of a dried solid was obtained.

**[Table 1]**

| | 1a | 1b | 1c | 1d | 1e | 1f | 1g | 1h |
|---|---|---|---|---|---|---|---|---|
| SMA | 100g | 100g | 100g | 100g | 100g | 100g | 100g | 100g |
| Aniline | 20g | 15g | 10g | 10g | 0g | 0g | 0g | 0g |
| Allylamine | 0g | 0g | 0g | 5g | 15g | 20g | 10g | 5g |
| Diallylamine | 10g | 15g | 20g | 0g | 0g | 0g | 10g | 20g |
| Zepamine M2070 | 10g | 10g | 10g | 10g | 15g | 15g | 15g | 15g |

### Embodiments 1-1b to 1-1h

Compounds were obtained by performing the preparing processes in the same way as above except for using the raw materials in the ratios shown in the above Table 1.

### Embodiment 2: Preparation of UV curable aqueous dispersion liquid

### 2-1: Preparation of dispersion liquid

### Embodiment 2-1a

20 wt% of Disperse Red 60 and10% of resin obtained in the embodiment 1-1a and neutralized with N,N'-dimethylethanolamine, 2% of styrene-acryl polymer dispersant(LMV7025,Basf) were mixed with water. This mixture was dispersed by the bead mill (or the dyno-mill, KD-Lab.) for 12 hours. The prepared dispersion liquid was let down to 15wt% of solid with respect to a colorant, and then filtered to obtain a dispersion liquid 2-1a having an average particle size of 91.5 nm.

### Embodiments 2-1b to 2-1h

Dispersion liquids 2-1b to 2-1h for dispersion dyes were prepared by the same method as that of preparing the foregoing dispersion liquid, in which the same processes are used except for different dispersants as shown in the following Table 2.

**[Table 2]**

| Dispersion liquid | Dispersion dyes | Dispersant 1 | Dispersant 2 | Ratio of pigments/dispersants (based on solid) | Dispersion time | Dispersion liquid pH | Average particle size (nm) |
|---|---|---|---|---|---|---|---|
| 2-1a | Disperse Red 60 | 1-1a | LMV7025 | 5/3 | 12 | 8.6 | 91.5 |
| 2-1b | Disperse Red 60 | 1-1b | LMV7025 | 5/3 | 12 | 8.7 | 88.3 |
| 2-1c | Disperse Red 60 | 1-1c | LMV7025 | 5/3 | 12 | 8.9 | 80.4 |
| 2-1d | Disperse Red 60 | 1-1d | LMV7025 | 5/3 | 12 | 8.7 | 95.0 |
| 2-1e | Pigment Blue 15:3 | 1-1e | Zetasperse 2500 | 5/3 | 6 | 8.5 | 130.5 |
| 2-1f | Pigment Blue 15:3 | 1-1f | Zetasperse 2500 | 5/3 | 6 | 8.6 | 131.4 |
| 2-1g | Pigment Blue 15:3 | 1-1g | Zetasperse 2500 | 5/3 | 6 | 8.7 | 133.2 |
| 2-1h | Pigment Blue 15:3 | 1-1h | Zetasperse 2500 | 5/3 | 6 | 8.7 | 132.9 |

### Embodiment 2-2a

20 wt% of Pigment Blue 15:3 and 6% of styrene-acryl polymer dispersant neutralized with N,N'- diallylamine/triethanolamine (1/4) were mixed with water. This mixture was dispersed by the bead mill (or the dyno-mill, KD-Lab.). The prepared dispersion liquid was filtered to obtain a dispersion liquid 2-2a having an average particle size of 124.5 nm.

### Embodiment 2-2b

20 wt% of Pigment Blue 15:3 and 6% of styrene-acryl polymer dispersant neutralized with N,N'- diallylamine/triethanolamine (1/1) were mixed with water. This mixture was dispersed by the bead mill (or the dyno-mill, KD-Lab.). The prepared dispersion liquid was filtered to obtain a dispersion liquid 2-2b having an average particle size of 132.6 nm.

Each of the prepared dispersion liquids was put in a container and placed in a constant-temperature water tank having a temperature of 25°C to stabilize the temperature of the dispersion liquid and then measure an average particle size, viscosity, and pH.

The average particle size was measured by NanotracTM 250 of Microtrac, and the viscosity was measured by the LVDV-II B-type viscometer of BROOKFEILD.

**[Table 3]**

| Dispersion liquid | pH | Average particle size (nm) | Viscosity (cps) |
|---|---|---|---|
| 2-1a | 8.6 | 91.5 | 3.88 |
| 2-1b | 8.7 | 88.3 | 3.84 |
| 2-1c | 8.9 | 80.4 | 3.62 |
| 2-1d | 8.7 | 95.0 | 5.00 |
| 2-1e | 8.5 | 130.5 | 10.4 |
| 2-1f | 8.6 | 131.4 | 10.6 |
| 2-1g | 8.7 | 133.2 | 9.7 |
| 2-1h | 8.7 | 132.9 | 9.5 |
| 2-2a | 8.2 | 124.5 | 9.1 |
| 2-2b | 7.9 | 132.6 | 9.8 |

In result, as shown in the Table 3, each dispersion liquid had a small average particle size of 100nm to 130nm and showed a low viscosity, and therefore it was confirmed that each dispersion liquid has excellent physical properties for the UV curable aqueous ink composition.

### Embodiment 3: UV curability of UV curable aqueous dispersion liquid

To test the UV curability, 100g of sample ink was prepared by adding the UV ray initiator and the wetting agent based on the compositions shown in the following table to the dispersion liquids of 2-1a to 2-1d obtained according to the embodiment 2.

Here, the wetting agent, the UV ray initiator, the surface tension modifier, etc. were commercially available products commonly used in the industry.

For the test, a drop of sample inks according to the embodiments and comparative examples was dripped on a PET film by a disposable pipette, dried as left at room temperature for 1 hour, and photocured as irradiated with the UV rays. Then, purified water was added dropwise to the sample so as to determine whether the pigment leaches and whether the shape of the cured ink is maintained.

**[Table 4]**

| Embodiments | Embodiment 3-1a | Embodiment 3-1b | Embodiment 3-1c | Embodiment 3-1d | Embodiment 3-2a | Embodiment 3-2b | Embodiment 3-2c |
|---|---|---|---|---|---|---|---|
| Dispersion liquid 2-1a | 33.3 g | | | | 33.3 g | | |
| Dispersion liquid 2-1a | - | 33.3 g | | | - | 33.3 g | |
| Dispersion liquid 2-1a | - | | 33.3 g | | - | | 33.3 g |
| Dispersion liquid 2-1a | | | | 33.3 g | | | |
| Wetting agent | 20 g | 20 g | 20 g | 20 g | 20 g | 20 g | 20 g |
| UV ray in itiator | 0.5 g | 0.5 g | 0.5 g | 0.5 g | - | - | - |
| Surface tension modifier | 0.1 g | 0.1 g | 0.1 g | 0.1 g | 0.1 g | 0.1 g | 0.1 g |
| Purified water | balance | balance | balance | balance | balance | balance | balance |
| Curability | Insoluble | Insoluble | Insoluble | Insoluble | Dissolved | Dissolved | Dissolved |

| | | | | | | | |
|---|---|---|---|---|---|---|---|
| *Insoluble: the film of cured and dried ink was maintained without leaching of the pigment when the purified water was added dropwise thereto. *Dissolved: the film of the cured and dried ink was destroyed or the pigment was leached into a solution with the purified water when the purified water was added dropwise thereto. | | | | | | | |

In result, as shown in the Table 4, the ink compositions according to the comparative examples 3-2a to 3-2c had problems in that the film of the cured and dried ink was destroyed or the pigment was leached when the purified water was added dropwise, but the ink compositions according to the embodiments 3-1a to 3-1d showed that the film of the cured and dried ink was stably maintained and the pigment does not leach even through the purified water was added dropwise.

Although specific embodiments of the disclosure have been described above in detail, it will be apparent for a person having ordinary skill in the art that these descriptions are merely embodiments and do not limit the scope of the disclosure. Accordingly, the substantial scope of the disclosure will be defined by the appended claims and their equivalents.

## Claims

1. An ultraviolet (UV) curable aqueous dispersant comprising a UV curable functional group.

2. The UV curable aqueous dispersant according to claim 1, wherein the UV curable functional group comprises a UV curable functional group for dispersing dyes/pigments.

3. The UV curable aqueous dispersant according to claim 1, wherein the UV curable aqueous dispersant comprises a styrene acrylic dispersant or styrene-maleic anhydride dispersant comprising the UV curable functional group.

4. The UV curable aqueous dispersant according to claim 1, wherein the UV curable functional group is introduced by chemical bonding.

5. An ultraviolet (UV) curable aqueous ink composition comprising:
(a) the UV curable aqueous dispersant according to claim 1;
(b) an aqueous amine comprising a UV curable functional group; and
(c) one or more selected among pigments and dyes.

6. The UV curable aqueous ink composition according to claim 5, wherein the UV curable aqueous dispersant is improved in colloidal stability by an encapsulation reaction.

7. The UV curable aqueous ink composition according to claim 5, further comprising one or more selected among water-soluble and water-dispersible resins.

8. The UV curable aqueous ink composition according to claim 5, further comprising a UV curable monomer or oligomer.

9. The UV curable aqueous ink composition according to claim 5, wherein the aqueous amine comprises a primary amine, a secondary amine, a tertiary amine, or a quaternary amine.

10. The UV curable aqueous ink composition according to claim 5, wherein the UV curable functional group in the (b) is based on a chemical bond or an ionic bond.

11. The UV curable aqueous ink composition according to claim 5, further comprising an aqueous dispersant comprising no UV curable functional group.

12. The UV curable aqueous ink composition according to claim 5, wherein the ink composition comprises an ink composition for ink jet.

13. A method of preparing an ultraviolet (UV) curable aqueous ink composition, the method comprising:
(a) preparing a UV curable aqueous dispersant comprising a UV curable functional group;
(b) mixing the UV curable aqueous dispersant and an aqueous amine comprising a UV curable functional group; and
(c) adding one or more selected among pigments and dyes.

14. A method of preparing an ultraviolet (UV) curable aqueous ink composition, the method comprising:
(a) preparing a dye/pigment dispersion liquid by adding and dispersing one or more selected among pigments and dyes to a UV curable aqueous dispersant comprising a UV curable functional group; and
(b) adding and mixing an aqueous amine comprising a UV curable functional group to the dye/pigment dispersion liquid.

15. The method according to claim 14, wherein the (b) comprises adding and mixing additives and the aqueous amine comprising the UV curable functional group to the dye/pigment dispersion liquid.

16. A method of preparing an ultraviolet (UV) curable aqueous ink composition, the method comprising:
(a) simultaneously adding and mixing a UV curable aqueous dispersant comprising a UV curable functional group, one or more selected among pigments and dyes, and an aqueous amine comprising a UV curable functional group to purified water; and
(b) performing dispersion after the (a).

17. The method according to claim 16, wherein, the (a) comprises simultaneously adding and mixing the UV curable aqueous dispersant, one or more selected among the pigments and dyes, the aqueous amine comprising the UV curable functional group, and additives to the purified water.

18. The method according to any one of claims 13 to 17, wherein the UV curable functional group of the UV curable aqueous dispersant comprises a UV curable functional group for dispersing the dyes/pigments.

19. The method according to any one of claims 13 to 17, wherein the UV curable aqueous dispersant in the (a) comprises a styrene acrylic dispersant or styrene-maleic anhydride dispersant comprising the UV curable functional group.

20. The method according to any one of claims 13 to 17, wherein the UV curable functional group of the UV curable aqueous dispersant is introduced by chemical bonding.

21. The method according to any one of claims 13 to 17, wherein the UV curable aqueous dispersant in the (a) is improved in colloidal stability by an encapsulation reaction.

22. The method according to any one of claims 13 to 17, further comprising one or more selected among water-soluble and water-dispersible resins.

23. The method according to any one of claims 13 to 17, further comprising adding a UV curable monomer or oligomer.

24. The method according to any one of claims 13 to 17, wherein the aqueous amine in the (b) comprises a primary amine, a secondary amine, a tertiary amine, or a quaternary amine.

25. The method according to any one of claims 13 to 17, wherein the UV curable functional group of the aqueous amine is based on a chemical bond or an ionic bond.

26. The method according to any one of claims 13 to 17, further comprising an aqueous dispersant comprising no UV curable functional group.

27. A method of preparing an ultraviolet (UV) curable aqueous ink composition, the method comprising:
(a) mixing an aqueous dispersant comprising no UV curable functional group and an aqueous amine comprising the UV curable functional group; and
(b) adding one or more selected among pigments and dyes.

28. A method of preparing an ultraviolet (UV) curable aqueous ink composition, the method comprising:
(a) preparing a dye/pigment dispersion liquid by adding and dispersing one or more selected among pigments and dyes to an aqueous dispersant comprising no UV curable functional group; and
(b) adding and mixing an aqueous amine comprising a UV curable functional group to the dye/pigment dispersion liquid.

29. The method according to claim 28, wherein the (b) comprises adding and mixing additives and the aqueous amine comprising the UV curable functional group to the dye/pigment dispersion liquid.

30. A method of preparing an ultraviolet (UV) curable aqueous ink composition, the method comprising:
(a) simultaneously adding and mixing an aqueous dispersant comprising no UV curable functional group, one or more selected among pigments and dyes, and an aqueous amine comprising a UV curable functional group to purified water; and
(b) performing dispersion after the (a).

31. The method according to claim 30, wherein the (a) comprises simultaneously adding and mixing the aqueous dispersant, one or more selected among the pigments and dyes, the aqueous amine comprising the UV curable functional group, and additives to the purified water.

32. The method according to any one of claims 27 to 31, wherein the aqueous dispersantis improved in colloidal stability by an encapsulation reaction.

33. The method according to any one of claims 27 to 31, further comprising one or more selected among water-soluble and water-dispersible resins.

34. The method according to any one of claims 27 to 31, further comprising adding a UV curable monomer or oligomer.

35. The method according to any one of claims 27 to 31, wherein the aqueous amine comprises a primary amine, a secondary amine, a tertiary amine, or a quaternary amine.

36. The method according to any one of claims 27 to 31, wherein the UV curable functional group of the aqueous amine is based on a chemical bond or an ionic bond.

37. A method of preparing an ultraviolet (UV) curable aqueous ink composition, the method comprising neutralizing an aqueous dispersant with a monomer comprising a counter ion.

38. The method according to claim 37, further comprising adding an aqueous amine comprising the UV curable functional group.

39. The method according to claim 38, wherein the aqueous amine comprises a primary amine, a secondary amine, a tertiary amine, or a quaternary amine.

40. The method according to claim 39, wherein the UV curable functional group of the aqueous amine is based on a chemical bond or an ionic bond.

41. A method of preparing an ultraviolet (UV) curable aqueous ink composition, the method comprising preparing a UV curable aqueous ink composition by applying a UV curable cation as a counter ion to an aqueous dispersant.

42. The method according to any one of claims 37 to 41, wherein the aqueous dispersant is improved in colloidal stability by an encapsulation reaction.

43. The method according to any one of claims 37 to 41, further comprising one or more selected among water-soluble and water-dispersible resins.

44. The method according to any one of claims 37 to 41, further comprising adding a UV curable monomer or oligomer.

45. A method of forming an image on a recording medium, the method comprising:
(a) printing the UV curable aqueous ink composition according to any one of claims 5 to 12 onto a printing area surface of the recording medium; and
(b) irradiating ink on the printing area surface with UV rays.
